(19) Europäisches Patentamt
European Patent Office
Office européen des brevets

(11) **EP 2 525 586 A1**

(12) **EUROPEAN PATENT APPLICATION**

(43) Date of publication:
**21.11.2012 Bulletin 2012/47**

(21) Application number: **12168109.2**

(22) Date of filing: **15.05.2012**

(51) Int Cl.:
*H04N 21/44* (2011.01)      *H04N 21/24* (2011.01)
*H04N 21/234* (2011.01)     *H04N 21/442* (2011.01)
*H04N 21/647* (2011.01)     *H04N 7/26* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.05.2011 US 201113110538**

(71) Applicant: **Telefonaktiebolaget L M Ericsson
(publ)
164 83 Stockholm (SE)**

(72) Inventors:
• **Lindegren, David**
  **977 51 Luleå (SE)**
• **Da Silva, Icaro L.J.**
  **195 21 Sollentuna (SE)**
• **Gustafsson, Jörgen**
  **972 52 Luelå (SE)**

(74) Representative: **Carlsson, Carl Fredrik Munk
Bergenstråhle & Lindvall AB
P.O. Box 17704
118 93 Stockholm (SE)**

(54) **Method and arrangement for supporting quality estimation of streamed video**

(57)      Method and arrangement for supporting quality estimation of streamed video. The method comprises obtaining an indicator of a number of discontinuities related to a segment of a video stream, and an indicator of a number of received packets related to said segment of the video stream during a predefined period of time. The method further comprises converting said obtained indicators, by use of at least one mapping function, into a set of parameters suitable for use as input parameters to a parametric video quality estimation model. The method and arrangement enables parametric quality estimation based on the basic parameters reported by legacy equipment.

Figure 4

EP 2 525 586 A1

**Description**

**TECHNICAL FIELD**

The invention relates generally to quality estimation of streamed video, and particularly to supporting the same.

**BACKGROUND**

Current IPTV set top boxes have very limited reporting capabilities. They often only report small parts of the Broadband Forum recommendation, TR135, describing how and what to report back to a server from a set top box. This reported information is often very basic and is often limited by the decoder included in the box. The only reported parameter connected to transport layer degradation of the media is normally the so-called "discontinuity counter", which adds together the number of times the video is degraded. However, this parameter says nothing about the duration of each interruption/degradation, or how severe it is. This parameter, i.e. the "discontinuity counter", is reported by most set top boxes, regardless of brand.

A provider of streamed video may want to keep informed of the received quality of the provided service. However, most preferred video quality estimation models require access to certain information related to the video stream of which the received quality is to be estimated and/or evaluated. As described above, most current set top boxes do not report the information required for estimating the quality of a received video stream.

With newer set top boxes that fully support the TR135 recommendation, such lack of reported information will not be a problem, since these set top boxes provide all the information required to derive satisfying quality estimates. However, for an IPTV provider who wants to monitor the network it is interesting to monitor all set top boxes, not only the ones fully supporting TR135. However, the lifecycle of a set top box is quite long, so even if TR135 fully compliant set top boxes are now made available in the market, there will still be a long time before the currently used set top boxes are replaced by such "modern" set top boxes.

The current solutions for IPTV service assurance rely on content server probes, which is a non-standardized solution. In general, these probes are not available in the operator's side, which works as a smart pipe, but is only available to service providers which are also the provider of the network. Moreover, getting such probes for all the available channels requires some upgrade in the network nodes which can generate a scalability problem.

There is no satisfactory current solution for estimating the quality of a video stream received by legacy set top boxes, which are non-compliant to e.g. TR135.

**SUMMARY**

It would be desirable to monitor the quality of video streams received by legacy equipment. It is an object of the invention to enable improved quality estimation of video streams received by such legacy equipment.

According to a first aspect a method is provided for supporting quality estimation of streamed video. The method is to be performed by a network node. The method comprises obtaining an indicator of a number of discontinuities related to a segment of a video stream, and an indicator of a number of received packets related to said segment of the video stream during a predefined period of time. The method further comprises converting said obtained indicators, by use of at least one mapping function, into a set of parameters suitable for use as input parameters to a parametric video quality estimation model.

According to a second aspect, a network node is provided for supporting quality estimation of streamed video, the network node. The network node comprises a functional unit adapted to obtain an indicator of a number of discontinuities related to a segment of a video stream, and an indicator of a number of received packets related to said segment of the video stream during a predefined period of time. The network node further comprises a functional unit adapted to convert said obtained indicators by use of at least one mapping function, into a set of parameters suitable for use as input parameters to a parametric video quality estimation model.

The above method and arrangement provide an efficient approach or scheme for making the reports coming from e.g. "old" set top boxes more useful for an operator that wants to measure the perceived video quality in his/her network, for example an IPTV network. The above method and arrangement enables that perceived video quality may be estimated by use of parametric models based on the basic parameters which are reported from such "old" equipment, which is very beneficial. The reports from e.g. legacy set top boxes or other decoding devices are thus made usable for models such as e.g. those being standardized in ITU-T Study Group Question 14. The method relies on basic reports e.g. from the current set top boxes without any additional information about network or content server probes. The suggested solution or technique can also be applied to other "non-sufficient" service assurance metrics to tune it to other models than those mentioned here.

By not introducing a need for any new hardware equipment, this solution will scale well with an increased amount of users in a network; both in a technical and an economical perspective, since the solution is very cost efficient. The enabling of use of up-to-date parametric estimation models based on "old" basic data makes such data useful for performing e.g. media adaptation, i.e. changing characteristics of a media stream based on estimated quality conditions.

The above method and arrangement may be implemented in different embodiments. In some embodiments, an indicator of a number of lost I-frames related to said segment of the video stream is also obtained and converted. The set of parameters suitable for input to a parametric quality model may comprise a bit rate and a packet loss rate related to said segment of the video stream. The set of parameters may further comprise a corruption duration related to said segment. Some embodiments also involve the actual quality estimation based on the set of parameters. The conversion from the obtained indicators of parameters to the set of parameters suitable for input to a parametric quality model may be performed by use of at least one mapping function derived based on data from simulations, to which data a model curve or function has been fitted.

In some embodiments, the method is performed by a decoding device, which receives the video stream of which the received quality is to be estimated. In other embodiments, the method may be performed in some other network node, such as a monitoring node or control node, which then obtains the indicators e.g. from a decoding device (which is the receiver of the video stream of which the quality is to be estimated).

The embodiments above have mainly been described in terms of a method. However, the description above is also intended to embrace embodiments of the arrangement and network node, adapted to enable the performance of the above described features. The different features of the exemplary embodiments above may be combined in different ways according to need, requirements or preference.

## BRIEF DESCRIPTION OF DRAWINGS

The invention will now be described in more detail by means of exemplifying embodiments and with reference to the accompanying drawings, in which:

Figure1 is a diagram showing characteristics of received video stream packets. The parameter "corruption duration", which is the distance (in frames or time) from a corrupt frame to the following (non-corrupt) I-frame, is illustrated by solid vertical lines. The distance between I-frames is 1 second.

Figure2 is a diagram showing a mapping function in accordance with an exemplifying embodiment.

Figure3 is a diagram showing a mapping function in accordance with an exemplifying embodiment.

Figure 4 is a flow chart illustrating a procedure performed in/by a network node, according to an embodiment.

Figure 5 is a block diagram illustrating a network node adapted according to an exemplifying embodiment.

Figure 6 is a block diagram illustrating an arrangement to be used in a network node according to an exemplifying embodiment.

## DETAILED DESCRIPTION

By using a statistical approach and converting the few measurement parameters which are actually available in (or from) a "legacy" IPTV set-top box to parameters which are suitable as input to a media/video quality model, the quality of a received video stream can, in fact, be estimated also for such a set-top box.

It is not evident that such a conversion is possible. However, in this disclosure, a method and arrangement for converting a set of very basic parameters into parameters which are suitable for use as input to a parametric video quality estimation model will be described.

The basic parameters which are converted and used for deriving parameters necessary for video stream quality estimation using a "key model" are: the "the number of received packets" (rxNr), the "discontinuity counter" (or continuity counter), and the "number of lost I-frames". In some embodiments, the parameter "number of lost I-frames" is not used.

A relation is found between the basic parameters "number of received packets" and "discontinuity counter" and the key model input parameters "encoded bitrate" and "packet loss". The packet loss is derived from a measurement of the number of discontinuities in the transport stream and matching said measurement to a probable number of degraded frames/packet loss. By this technique it is possible to achieve a better correlation between what is measured and what is perceived by the viewer.

A statistical "conversion"-function is calculated from several simulated sessions and an equation or mapping is created by evaluating a "best fit" for a similar function.

The basic parameters "discontinuity counter" (or continuity counter) and "number of lost I-frames" are provided by most legacy set top boxes. Further, the number of received packets is assumed to be available in said set top boxes, even though this parameter is typically not reported to other entities. Such reporting could however be arranged.

Bit rate

One input parameter to be derived is the bit rate of the video stream of which a received quality is to be estimated. The only available parameter for deriving the bit rate may be the number of received packets, rxNr, in the set top box. The number of received packets, rxNr, is used to estimate the received bit rate. In order to do so, the packet size needs to be known or estimated. In most cases, MPEG2-TS (Transport Stream) is used to stream video. If MPEG2-TS is used, the packet size will be 188 bytes large, i.e. 1504 bits/package. By using a specified window size for the measurements, e.g. 10s, the estimated bitrate could be calculated as:

$$Estimated\_Bitrate = rxNr * 1504\ b\ /\ 10\ s$$

The number of bits per packet will be different depending on which transport type that is used. However, the most widely used transport format for IPTV is the MPEG2-TS. The transport type of a video stream is known in a set top box receiving the video stream.

Corruption duration

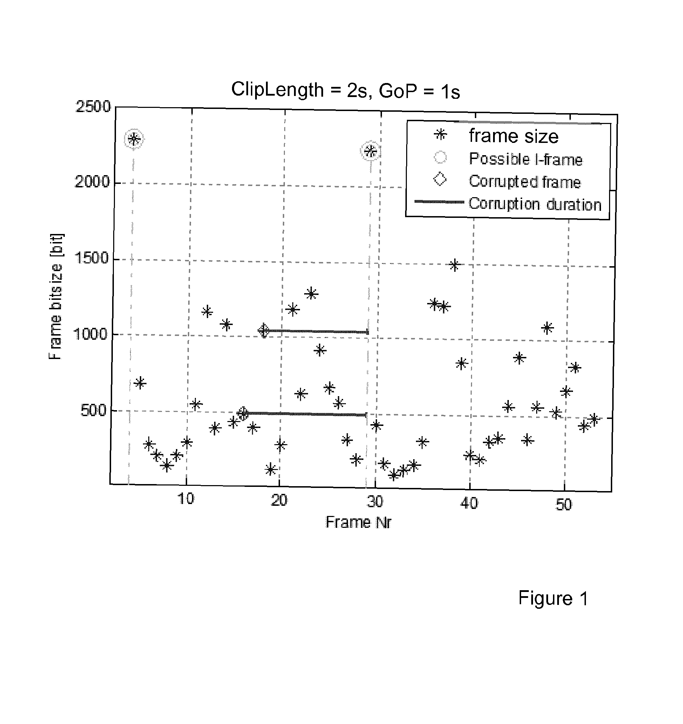

The information required as input to a preferred media quality model may include the parameters "*packet loss rate*" and "*packet loss pattern*". These parameters are usually not possible to measure directly in a legacy set-top box. It is found that statistical methods must be used in order to find out how much any packet losses will affect the quality of a received video stream.
The main reason why "packet loss" cannot be directly converted to video quality degradation is the varying *distance between I-frames* (complete video frames), which is typical for IPTV. The distance between I-frames is typically held as short as possible to minimize channel switching times, but long enough to help encoding. One I-frame per second, or 1 Hz, is a common distance between I-frames, which will be used in examples within this disclosure.
The *Corruption duration* is a parameter that bridges the gap between packet loss and perceived video quality degradation. The *corruption duration* parameter will in some way be used in the standardized models for estimating IPTV perceived quality from transport header information. This parameter describes how long time the video is affected by packet losses. The corruption duration is illustrated in figure 1.
Figure 1 shows a 2s clip of a result from simulations. Each "star" or "asterisk" indicates a frame, where the size of the frame can be seen on the y-axis. Figure 1 shows 53 frames, of which two are larger than 2000 bits. These two are marked with circles as possible I-frames. Further, two of the 53 frames are corrupt and indicated with a rhomb. The corruption duration is the distance from a corrupt frame to the next non-corrupt I-frame. The corruption duration is indicated as solid horizontal lines in figure 1.
As previously mentioned, the parameters "*discontinuity counter*" and "number of *lost I-frames*" are commonly available in most set-top boxes. These parameters do not describe well how the video is affected in regard of perceptual quality, and therefore, a conversion to the model parameter *corruption duration* may be required. The *discontinuity counter* is calculated based on the standardized parameter *continuity counter* in the MPEG2 transport stream standard.
To create such a conversion from "discontinuity counter" to "corruption duration", data is simulated and a *parameter estimation model function* is calculated using regression analytics.

- A normal packet loss distribution on an IP network is often modeled as a 2/4-state Markov chain. Such a Markov chain has been used to simulate random packet losses in this example.
- Packet loss traces are simulated and applied on randomly chosen packet traces from real, error free, IPTV sessions.
- Packet loss rate, corruption duration, the discontinuity counter and the number of lost I-frames are calculated from those traces,
- Several realizations are evaluated to create as small confidence intervals as possible.
- Since the discontinuity counter and packet loss numbers do not map directly, a function is needed to describe the relationship in general (the discontinuity counter can increase by 1, which could mean 1 packet loss or several in a row).

By fitting a function to the result of the simulations, it could be derived that the corruption duration "corrDur" could be estimated as:

$$corrDur\ estimated = c0 - c0 / (1 + c1*(1+ number\_of\_lost\_Iframes)* disc\_losses)$$

where disc_losses = discontinuity counter / rxNr; c0: is the length of the measurement window (i.e. maximum length of corruption duration for this measurement), 5 in the image below; and c1: must be recalculated for different video formats since the number of packets / video frame and number of packets / second, and thus the number of frames that will be affected by lost packets, will differ between different frame sizes.

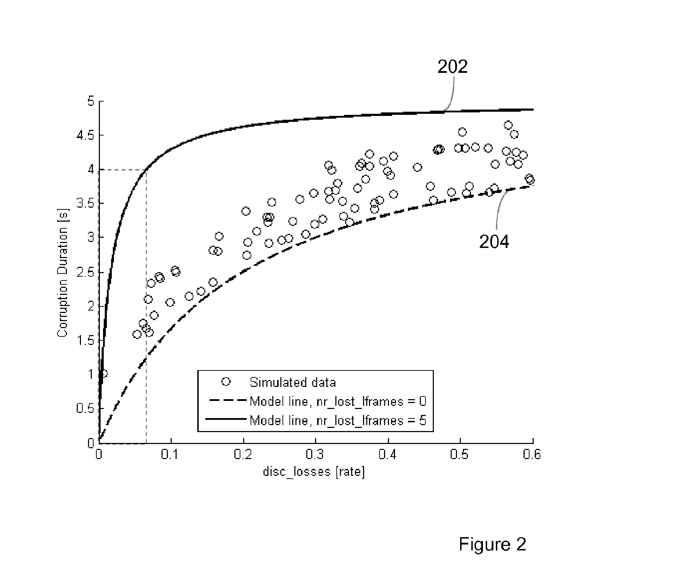

Figure 2 is based on a 5s measurement window (that is why the corrDur never becomes higher than 5) and shows the result of simulations. The diagram in figure 2 illustrates the relation between the disc_losses and corruption duration, where disc_losses is related to the discontinuity counter and number of received packets as disc_losses = discontinuity counter / rxNr, as described above, i.e. the average number of discontinuities per received packet. The model curves and the data illustrated in figure 2 further depend on the parameter "number of lost I-frames". The solid curve 202 and the dashed curve 204 represent model curves adapted to simulated data associated with a "number of lost I-frames" of 5 and 0, respectively. A model curve fitted to the circles illustrating simulated data would represent an average number of lost I-frames.

The lower part (below corrDur =4) of the solid model curve 202 representing a "number of lost I-frames"-parameter of 5 is not representative, since this curve should not go below a corruption duration of 4s. The unrepresentative part of the solid curve is marked by a dashed box. However, these samples for low disc_losses are very difficult to derive in practice. Therefore, it could be advantageous to apply a condition when deriving the corruption duration, such as e.g.:

corruption duration = min(nr_of_lost_I-frames * GoP, value on model curve).
where GoP (Group of Pictures) is the distance in seconds between I-frames.

Packet losses

The *packet loss rate* can, like the corruption duration, usually not be measured directly in a legacy set-top box, and must therefore also be estimated or derived based on the available parameters, in this case again the *discontinuity counter.*

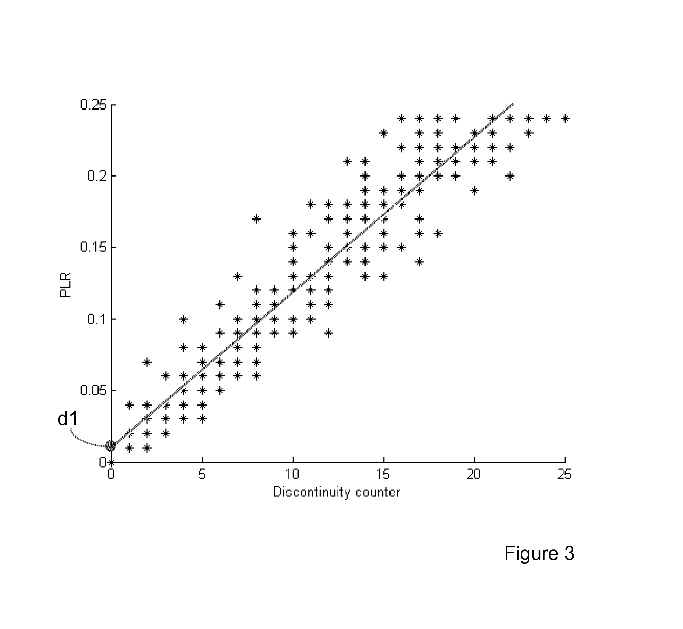

A curve for packet loss rate can be derived in the same fashion as for the *corruption duration* and used in the quality assessment models. A set of samples and a model line fitted to said samples are illustrated in figure 3. In most cases the packet loss rate can be estimated by the function:

$$Packet\_loss\_rate = d0 * discontinuity\_counter / rxNr + d1$$

where d0 and d1 are constants setting the shape of the model curve or line to fit the simulated results. The model line illustrated in figure 3 is fitted to simulation results for 200 packets. For the illustrated model line, the values of d0 and d1 are set to 0.0086 and 0.01, respectively, in order to fit the line to the simulation results/samples.

As can be, at least partly, anticipated from figure 3, the accuracy of the model decreases with an increasing number of packet losses. However, the packet loss rate is seldom higher than a couple of percents for IPTV services. Note: the y-axis is not in percent but in "rate", i.e. percent/100.

The data/samples illustrated in figure 3 are from simulated traces up to 25% packet loss.

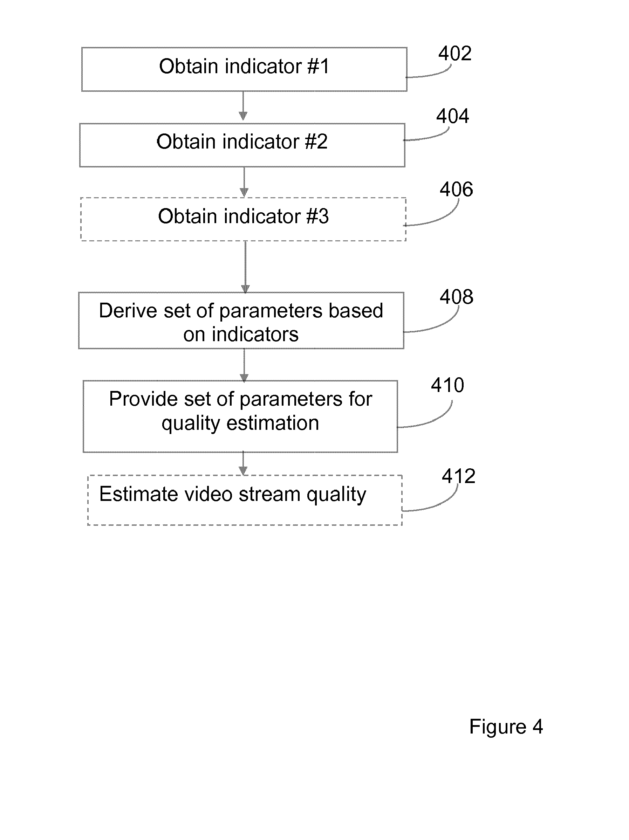

Exemplifying procedure, figure 4

Below, an exemplifying embodiment of the procedure for supporting quality estimation of streamed video will be described with reference to figure 4. The procedure could be performed in/by a network node, such as e.g. a set-top-box, a mobile terminal, a tablet or other decoding device, or in some other network node, such as e.g. a control node or monitoring node.

Initially, a set of basic parameters or indicators of said basic parameters are obtained in actions 402-406. The set of basic parameters/indicators comprises a number/count of discontinuities related to a time segment of a video stream: a number/count of lost I-frames related to said segment of the video stream; and a number/count of received packets related to said segment of the video stream during a predefined period of time. The parameters/indicators could be received or retrieved e.g. from a functional unit generating or deriving said parameters/indicators from measurements and monitoring within the network node, or be received or retrieved from another network node, e.g. a decoding device, in which the parameters/indicators are generated or derived. Depending on which parameters that are needed or preferred as input parameters for quality estimation, the number of lost I-frames may not need to be obtained.

The obtained indicators are converted in an action 408, by use of at least one mapping function, into a set of derived parameters suitable for use as input parameters to a parametric video quality estimation model, thus enabling parametric video quality estimation based on said obtained indicators. The set of derived parameters may comprise a bit rate and at least one of a corruption duration and a packet loss rate, related to said segment of the video stream. The at least one mapping function may be derived based on data from simulations, to which a model mapping curve or function has been fitted.

The set of derived parameters may then be provided for use as input parameters to a parametric video quality estimation model in an action 410, thus enabling estimation of the perceived quality of the video stream in question. The perceived quality could be estimated by use of the parametric estimation model either in or in association with the network node in an action 412, or in another network node, such as e.g. a control node or monitoring node.

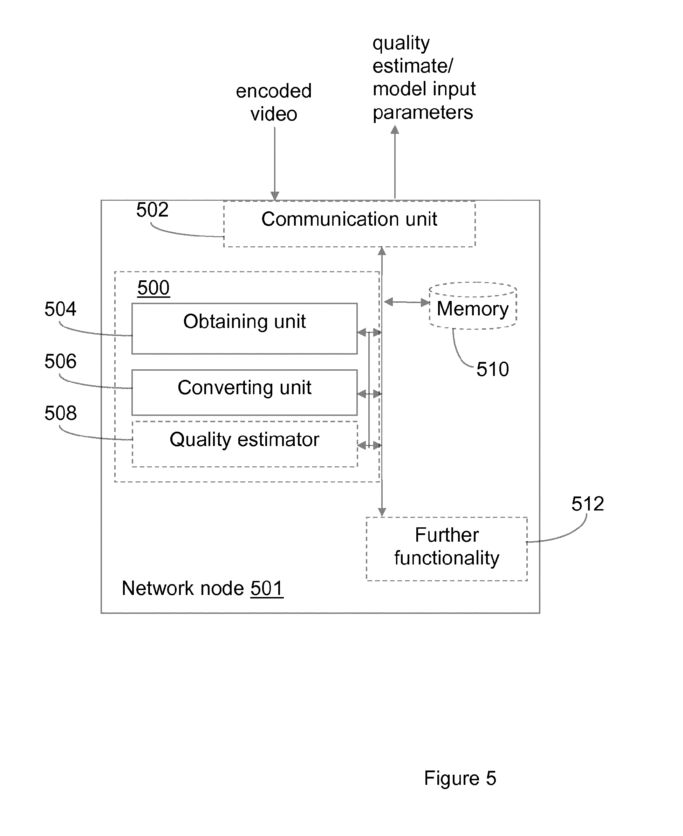

Exemplifying arrangement, figure 5

Below, an example arrangement 500, adapted to enable the performance of the above described procedure for supporting quality estimation of streamed video will be described with reference to figure 5. The arrangement is suitable for use in a network node and is illustrated as being located in/integrated with a network node 501 in figure 5. The network node could be e.g. a set-top-box, a mobile terminal, a tablet or other decoding device, or, in some other network node, such as e.g. a control node or monitoring node, as previously mentioned. The arrangement 500 is further illustrated as to communicate with other entities via a communication unit 502 which may be considered to comprise conventional means for wireless and/or wired communication. The arrangement or receiving node may further comprise other functional units 512, such as e.g. functional units providing regular set top box or mobile terminal functions, and may further comprise one or more storage units 510.

The arrangement 500 could be implemented e.g. by one or more of: a processor or a micro processor and adequate software, a Programmable Logic Device (PLD) or other electronic component(s).

The arrangement comprises an obtaining unit 504, adapted to obtain an indicator of a number/count of discontinuities related to a segment of a video stream; an indicator of a number/count of lost I-frames related to said segment of the video stream; and, an indicator of a number/count of received packets related to said segment of the video stream during a predefined period of time. The arrangement/network node further comprises a converting unit 506, adapted to convert said obtained indicators by use of at least one mapping function, into a set of derived parameters suitable for use as input parameters to a parametric video quality estimation model, thus enabling parametric video quality estimation based on said obtained indicators of basic, commonly available, parameters. The network node, e.g. the converting unit 506 may further be adapted to provide the derived parameters for use as input parameters to a parametric video quality estimation model. The derived parameters could be provided e.g. to a quality estimator 508, adapted to estimate quality of a received video stream by use of a parametric model, based on the provided parameters. Alternatively, the derived parameters could be provided to another node, where the actual quality estimation may be performed.

When only the input parameters "bit rate" and "packet loss rate" are needed or to be used for quality estimation, the number of lost I-frames does not need to be obtained.

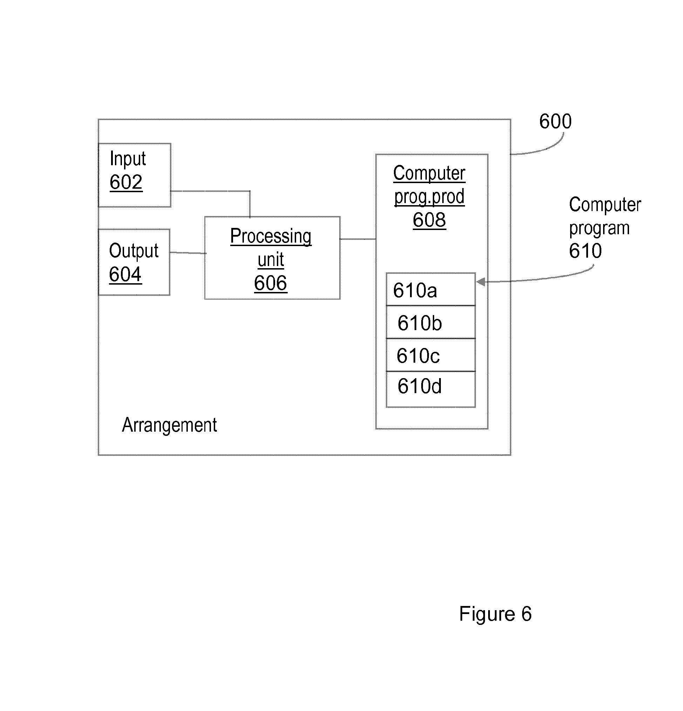

Exemplifying arrangement, figure 6

Figure 6 schematically shows an embodiment of an arrangement 600 for use in a network node, which also can be an alternative way of disclosing an embodiment of the arrangement 500 in a network node illustrated in figure 4. Comprised in the arrangement 600 are here a processing unit 606, e.g. with a DSP (Digital Signal Processor). The processing unit 606 may be a single unit or a plurality of units to perform different actions of procedures described herein. The arrangement 600 may also comprise an input unit 602 for receiving signals from other entities, and an output unit 604 for providing signal(s) to other entities. The input unit 602 and the output unit 604 may be arranged as an integrated entity.

Furthermore, the arrangement 600 comprises at least one computer program product 608 in the form of a non-volatile memory, e.g. an EEPROM (Electrically Erasable Programmable Read-Only Memory), a flash memory and a hard drive. The computer program product 608 comprises a computer program 610, which comprises code means, which when executed in the processing unit 606 in the arrangement 600 causes the arrangement and/or the network node to perform the actions of the procedure described earlier in conjunction with figure 4.

The computer program 610 may be configured as a computer program code structured in computer program modules. Hence, in an exemplifying embodiment, the code means in the computer program 610 of the arrangement 600 comprises an obtaining module 610a for obtaining indicators of a set of parameters generated by a decoding device, related to a time segment of a video stream. The computer program further comprises a converting module 610b for converting said obtained indicators by use of at least one mapping function, into a set of parameters suitable for use as input parameters to a parametric video quality estimation model. The computer program 610 may further comprise a quality estimator module 610c for estimating the quality of the segment of the video stream based on the set of parameters, by use of a parametric video quality estimation model. The computer program 610 could further comprise other modules 610d for providing other desired functionality.

The modules 610a-c could essentially perform the actions of the flow illustrated in figure 4, to emulate the arrangement in the network node illustrated in figure 5. In other words, when the different modules 610a-c are executed in the processing unit 606, they may correspond to the units 504-508 of figure 5.

Although the code means in the embodiment disclosed above in conjunction with figure 6 are implemented as computer program modules which when executed in the processing unit causes the arrangement and/or network node to perform the actions described above in the conjunction with figures mentioned above, at least one of the code means may in alternative embodiments be implemented at least partly as hardware circuits.

The processor may be a single CPU (Central processing unit), but could also comprise two or more processing units. For example, the processor may include general purpose microprocessors; instruction set processors and/or related chips sets and/or special purpose microprocessors such as ASICs (Application Specific Integrated Circuit). The processor may also comprise board memory for caching purposes. The computer program may be carried by a computer program product connected to the processor. The computer program product may comprise a computer readable medium on which the computer program is stored. For example, the computer program product may be a flash memory, a RAM (Random-access memory) ROM (Read-Only Memory) or an EEPROM, and the computer program modules described above could in alternative embodiments be distributed on different computer program products in the form of memories within the network node.

It is to be understood that the choice of interacting units or modules, as well as the naming of the units are only for exemplifying purpose, and nodes suitable to execute any of the methods described above may be configured in a plurality of alternative ways in order to be able to execute the suggested process actions.

It should also be noted that the units or modules described in this disclosure are to be regarded as logical entities and not with necessity as separate physical entities

## ABBREVIATIONS

| | |
|---|---|
| IPTV | Internet Protocol TeleVision |
| MOS | Mean Opinion Score, commonly used term to describe the perceived quality of a service. Often a value between 1 and 5. |
| corrDur | Corruption Duration. The time of a measurement that contains corrupted frames, i.e. the time from a corrupt frame to the next non-corrupt I-frame. |
| GoP | Group of Pictures, the distance between forced Intra frames in a video stream. |
| I-frames | Intra frame. Reference frames that is used in video encoding. A picture or slice encoded by jpeg encoding for images or similar. |
| P-frames | Predicted picture. Frames encoded as a difference between the current frame and the last I-frame. |
| MPEG2 TS MPEG2 | type Transport Stream for multimedia. Packetization for media streams. |

## Claims

**1.** Method performed by a network node for supporting quality estimation of streamed video, the method comprising:

- obtaining (402) an indicator of a number of discontinuities related to a segment of a video stream,
- obtaining an indicator of a number of received packets related to said segment of the video stream during a predefined period of time,
- converting (406) said obtained indicators, by use of at least one mapping function, into a set of parameters suitable for use as input parameters to a parametric video quality estimation model, thus enabling parametric video quality estimation based on said obtained indicators.

**2.** Method according to claim 1, further comprising:

   - obtaining (406) an indicator of a number of lost I-frames related to said segment of the video stream.

**3.** Method according to claim 1 or 2, wherein the set of parameters comprises a bit rate and at least one of a corruption duration and a packet loss rate, related to said segment of the video stream.

**4.** Method according to any of the preceding claims, further comprising:

   - estimating (410) quality of said video stream based on the set of parameters.

**5.** Method according to any of the preceding claims, wherein at least one of the at least one mapping function is derived based on data from simulations, to which data a model curve or function has been fitted.

**6.** Network node (501) for supporting quality estimation of streamed video, the network node comprising:

   - an obtaining unit (504), adapted to obtain:
   - an indicator of a number of discontinuities related to a segment of a video stream, and
   - an indicator of a number of received packets related to said segment of the video stream during a predefined period of time;

      - a converting unit (506), adapted to convert said obtained indicators by use of at least one mapping function, into a set of parameters suitable for use as input parameters to a parametric video quality estimation model, thus enabling parametric video quality estimation based on said obtained indicators.

**7.** Network node according to claim 6, further adapted to obtain an indicator of a number of lost I-frames related to said segment of the video stream.

**8.** Network node according to claim 6 or 7, further comprising a quality estimator (508), adapted to estimate the quality of the segment of the video stream based on the set of parameters, by use of a parametric video quality estimation model.

**9.** Network node according to any of claims 6-8, wherein the network node is at least one of:

      - a decoding device,
      - a set-top-box,
      - a mobile terminal,
      - a tablet.

**10.** Network node according to any of claims 6-8, wherein the network node is at least one of:

      - a monitoring node,
      - a control node.

Figure 1

Figure 2

Figure 3

Obtain indicator #1 — 402

Obtain indicator #2 — 404

Obtain indicator #3 — 406

Derive set of parameters based on indicators — 408

Provide set of parameters for quality estimation — 410

Estimate video stream quality — 412

Figure 4

encoded
video

quality
estimate/
model input
parameters

502    Communication unit

500

504    Obtaining unit

Memory

510

506    Converting unit

508    Quality estimator

Further
functionality

512

Network node 501

Figure 5

600

Input
602

Output
604

Processing
unit
606

Computer
prog.prod
608

610a
610b
610c
610d

Computer
program
610

Arrangement

Figure 6

## EUROPEAN SEARCH REPORT

Europäisches
Patentamt
European
Patent Office
Office européen
des brevets

Application Number

EP 12 16 8109

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/244289 A1 (RAAKE ALEXANDER [DE] ET AL) 1 October 2009 (2009-10-01) | 1-10 | INV. H04N21/44 H04N21/24 H04N21/234 H04N21/442 H04N21/647 H04N7/26 |
| Y | * paragraphs [0021], [0034] * <br> * paragraphs [0037], [0041] - [0043] * <br> * paragraph [0054] - paragraph [0064] * <br> * table 1 * | 2,5,7 | |
| X | EP 1 995 978 A1 (PSYTECHNICS LTD [GB]) 26 November 2008 (2008-11-26) <br> * paragraph [0001] * <br> * paragraph [0014] - paragraph [0018] * <br> * paragraph [0022] - paragraph [0036] * | 1-10 | |
| X | EP 1 727 375 A1 (PSYTECHNICS LTD [GB]) 29 November 2006 (2006-11-29) | 1,3,4,6, 8-10 | |
| Y | * paragraph [0010] * <br> * paragraph [0018] - paragraph [0037] * | 2,5,7 | |
| X | WO 2010/092848 A1 (NEC CORP [JP]; YACHIDA SHOJI [JP]) 19 August 2010 (2010-08-19) <br> * abstract * <br> & US 2011/289540 A1 (YACHIDA SHOJI [JP]) 24 November 2011 (2011-11-24) <br> * paragraph [0041] * <br> * paragraph [0048] - paragraph [0062] * <br> * paragraph [0107] - paragraph [0116] * <br> * paragraphs [0124], [0132] * <br> * paragraph [0137] * <br> * paragraph [0147] - paragraph [0151] * | 1-10 | TECHNICAL FIELDS SEARCHED (IPC) <br> H04N H04H |
| X | US 2003/121053 A1 (HONDA YOSHIZOU [JP]) 26 June 2003 (2003-06-26) | 1,6 | |
| Y | * paragraphs [0037], [0048] * <br> * paragraph [0069] - paragraph [0072] * <br> * paragraph [0079] - paragraph [0083] * | 2,5,7 | |
| | -/-- | | |

The present search report has been drawn up for all claims

| Place of search | Date of completion of the search | Examiner |
|---|---|---|
| Munich | 13 September 2012 | Vaquero, Raquel |

EPO FORM 1503 03.82 (P04C01)

Europäisches
Patentamt

European
Patent Office

Office européen
des brevets

# EUROPEAN SEARCH REPORT

Application Number

EP 12 16 8109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAI-CHIEH YANG ET AL: "Perceptual Temporal Quality Metric for Compressed Video", IEEE TRANSACTIONS ON MULTIMEDIA, IEEE SERVICE CENTER, PISCATAWAY, NJ, US, vol. 9, no. 7, 1 November 2007 (2007-11-01), pages 1528-1535, XP011346482, ISSN: 1520-9210, DOI: 10.1109/TMM.2007.906576 * page 1529, column 2, last paragraph - page 1532, line first * * page 1534, column 2, paragraph VII * ----- | 1,6 | |

TECHNICAL FIELDS
SEARCHED (IPC)

The present search report has been drawn up for all claims

| Place of search | Date of completion of the search | Examiner |
|---|---|---|
| Munich | 13 September 2012 | Vaquero, Raquel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**  EP 12 16 8109

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2012

| Patent document cited in search report | | Publication date | Patent family member(s) | | Publication date |
|---|---|---|---|---|---|
| US 2009244289 | A1 | 01-10-2009 | EP | 2106153 A1 | 30-09-2009 |
| | | | EP | 2106154 A1 | 30-09-2009 |
| | | | US | 2009244289 A1 | 01-10-2009 |
| EP 1995978 | A1 | 26-11-2008 | AT | 473600 T | 15-07-2010 |
| | | | EP | 1995978 A1 | 26-11-2008 |
| | | | US | 2008291842 A1 | 27-11-2008 |
| EP 1727375 | A1 | 29-11-2006 | EP | 1727375 A1 | 29-11-2006 |
| | | | US | 2007133608 A1 | 14-06-2007 |
| WO 2010092848 | A1 | 19-08-2010 | JP | 4544435 B2 | 15-09-2010 |
| | | | JP | 2010187097 A | 26-08-2010 |
| | | | US | 2011289540 A1 | 24-11-2011 |
| | | | WO | 2010092848 A1 | 19-08-2010 |
| US 2003121053 | A1 | 26-06-2003 | JP | 2003199128 A | 11-07-2003 |
| | | | US | 2003121053 A1 | 26-06-2003 |

For more details about this annex : see Official Journal of the European Patent Office, No. 12/82